Europäisches Patentamt

European Patent Office

Office européen des brevets

(19)

(11) Publication number: **0 135 292**
**A1**

(12) # EUROPEAN PATENT APPLICATION

(21) Application number: **84304864.6**

(22) Date of filing: **17.07.84**

(51) Int. Cl.⁴: **C 08 J 9/26**
**C 08 F 283/06, C 08 F 261/06**
**C 08 F 2/20**

(30) Priority: **18.07.83 US 515060**

(43) Date of publication of application:
**27.03.85 Bulletin 85/13**

(84) Designated Contracting States:
**AT BE CH DE FR GB IT LI LU NL SE**

(71) Applicant: **DUOLITE INTERNATIONAL S.A.**
**107, Rue Edith Cavell**
**F-94400 Vitry-sur-Seine(FR)**

(72) Inventor: **Dale, James A.**
**617 Fox Court East**
**Redwood City California 94061(US)**

(74) Representative: **Oliver, Roy Edward et al,**
**POLLAK MERCER & TENCH High Holborn House 52-54**
**High Holborn**
**London WC1V 6RY(GB)**

(54) A method of preparing a highly porous resin.

(57) Macroporous, synthetic resin particles, preferably cross-linked to be insoluble and infusible, of high strength and sphericity, and the desirable process for producing these resins using monomer-soluble, water-extractable macro-molecular porogens.

EP 0 135 292 A1

## EXTRACTABLE POROGEN RESINS

### FIELD OF THE INVENTION

The present invention relates generally to the field of synthetic, polymeric resin articles and more specifically the manufacture of crosslinked, controlled-porosity resins, formally charged or not.

### BACKGROUND OF THE INVENTION

United Kingdom Patent No. 785,157 (issued 23 October 1957) and United States Patent No. 3,122,514 (issued 25 February 1964) taught the process of polymerizing standard monomers used in ion exchange, in the presence of a dissolved polymer, to produce a composition of matter showing distinct and improved properties compared to traditional gel beads. Specifically, pre-polymerized styrene dissolved in mixtures of divinylbenzene, styrene, and a polymerization initiator yielded "opaque" beads with "micro-channels and pores" through which molecules diffused more readily than in conventional ion exchangers. The resins prepared thereby displayed a number of advantages: (1) much more resistant to shock, (2) superior as anion exchange resins in color removal, and (3) as cation exchangers, directly hydratable with little breakage after sulfonation.

One property which this technology did not improve was the problem of slow, but inevitable, oxidative cleavage of the polymeric matrix itself. More seriously, this technology introduced the problem of leaching of the original linear polymeric additive. As U.S. Patent No. 4,104,209 points out, extraction of the linear polymer during chemical transformation can form a slime and impurities, affecting the quality of the ion exchange resin being made. The contamination of process fluids also affects production economics adversely since reagents cannot be recycled, and the control of environmental pollution must be addressed. U.S. Patent No. 4,256,840 suggests that, worst of all, these resins would actually introduce contaminants into the fluids they were intended to purify.

Alternative processes for preparing specifically macroporous or "macroreticular" resins were found that circumvented many of the aforementioned problems and limitations of the polymeric porogen. Historically, these methods have been differentiated by the use of simply removable, low molecular weight compounds which are solvents for the monomer mixture and either (1) non-swellants or (2) swellants for the resulting crosslinked polymers. Moderate to high levels of crosslinking agents have been needed to hold down the large amounts of these porogens required to attain reasonable and useful porosities.

Another distinctive method involves the use of a suspended insoluble agent within the monomer droplet undergoing polymerization. For example, U.S. Patent No. 3,627,708 discloses a system whereby a water in styrene-divinylbenzene emulsion was itself carefully polymerized as beads in a surrounding aqueous suspension. Theoretically, other methods utilized in the plastics industries, such as foaming, could be applied to yield porous materials, but these do not form the right type of pores, and they are inappropriate to ion exchange, crosslinked polymer processing.

A good deal of study into the occurrence of macroporosity and its control has been made. Concise and thorough reviews have been available for some time: J. Seidel, J. Malinski, and K. Dusek, SOVIET PLASTICS, No. 12, 1963, p. 10-13, and J. Seidel, J. Malinsky, K. Dusek, and W. Heitz, ADV. POLY. SCI., Vol. 5, p. 113-213 (1963). A number of patents have issued on the subject. Of all the known methods for generating macroporosity, it is perhaps the initial polystyrene technique that has been clarified in greatest detail.

Separately, often redundant vocabularies have evolved from the different groups of inventors, depending on the historical state of understanding and which phenomenological aspects seemed most salient. Thus, adjectives like porous, macroreticular, sponge-like, and channelled have been used at times in the developing art to characterize the opaque beads and derived resins, now most commonly identified as "macroporous." In light of this distinction, the standard prior art gel resins are more thoroughly understood as "microporous." Similarly, the terms insert, pore-forming, phase-separating, and precipitating have all been applied to the agent or "porogen." When there are not differences in fact, these equivalent terminologies will be understood as interchangeable in this disclosure. The terms "diluent" and "modifier" have been used before, but they refer to much broader categories and include other phenomena, different from macroporosity. At present, some three porogen classes have been distinguished as (1) polymeric or better macromolecular, (2) swellant or "solvating," and (3) non-swellant or "non-solvating" or precipitating. Representative acronyms—pol, sol, nonsol—are now generally recognized by those conversant with this specialized art.

A substantial group of improvements, refinements, modification, variants, and combinations among the three main methods, and their resulting compositions of matter, have been made since the early disclosures. Published examples, employing linear [sic., soluble] polymers, include polyvinyl acetate and polymethyl methacrylate [J. Seidl, Disseration, Tschechosl. Akad. d. Wiss., Prag 1964], poly(vinyl acetate co-maleic or fumaric acid and esters) [French Patent No. 1,295,537], cellulose acetate butyrate [U.S. Patent No. 4,104,209], polyvinyl ethyl ether [U.K. Patent No. 1,140,910]. Broader disclosures include polyethylene, polyisobutylene, nylons, caprolactam polymers, aliphatic polyesters, cellulose nitrate, polyvinyl toluene, poly-alphamethylstyrene, poly(acrylonitrile co-maleic or fumaric acid), and styrene-butadiene elastomers, although specific details and characteristics have not been provided for most of these. Improvements have been made using all combinations of the three fundamental techniques: admixtures of swelling and non-swelling porogens (U.S. Patent Re 27,026), polymeric with non-swelling or precipitating porogens (U.S. Patent No. 4,358,546), and the last possible alternative of polymeric porogens with swelling or plasticizing agents (U.S. Patent Nos. 3,791,999 and 2,883,349). The betterments claimed are higher porosities, increased surface areas, control of sizing, reduced crosslinking, decreased swelling, and facilitated extraction of the porogen "inserts." An early teaching (U.S. Patent No. 2,883,349) revealed additionally bulk and solution polymerizations besides the traditional suspension or pearl polymerization, preferred by the ion exchange industry.

One problem facing all methods and processes has been the ultimate removal of the pore-forming agent, whatever it may be. The volatility associated with low molecular weight, sol and nonsol porogens allows distillation and recycling; they were therefore of particular commercial significance when introduced, although with higher energy costs and long production times, they are less so now. With pol porogens, researchers have sought for some time to facilitate removal in a discrete post-polymerization processing step. Many organic solvents from chlorocarbons to aromatics have been tried, yet these too have to be subsequently removed from the pores and swollen matrix of the bead. Obviously, such extraction

- 5 -                                    0135292

steps offer no improvement over the simple sol or nonsol porogen routes, particularly as far as toxic vapors and fire hazards are concerned. A real advantage accrues if the good extractant for the porogen is at least partially hydrophilic and can be washed away with water. Thus, depending on the particular porogen selected, water soluble substances such as acetone, alcohol, and acetic acid have been used. Even here, the problems of water pollution and increased biological oxygen demand (BOD) are incurred.

One refinement claims that mixtures of a polymeric porogen along with sol or nonsol liquids--a cellulose ester with heptane, ethylbenzene, butanol, or octane--aids in extraction and improves porosity (U.S. Patent No. 4,104,209). More ingeniously, this same patent teaches hydrolysis of the polymeric porogen under acidic or alkaline treatment to oligomers, the removal of which is said to be much easier. The mechanism of the process is probably more than implied. While oligomers do diffuse faster than true polymers, the stated hydrolysis reaction need not have de-polymerized the linear polymer at all, but merely converted it to a water-soluble form chemically. Aqueous dissolution of polyvinylpyridine by protonation, cellulose esters by ester rather than acetal hydrolysis, and polyacrylates by neutralization are all obvious, well-known procedures based on standard organic laboratory techniques. The operational presumption in these and analogous cases is that water solubility and organic solubility are incompatible properties to be achieved alternatively by some chemical transformation of a material.

A remaining development in the art overcame the organic-water solubility dichotomy. Large quantities of "surfactants"--low molecular weight, fatty monoglycerides and ethoxylated alcohols or fatty acids--were used (U.K. Patent No. 1,126,168) as porogens followed by an expected organic solvent extraction from the sponge-like resins.

These agents did not function as surfactants at all; otherwise, a disastrous emulsion rather than suspension polymerization would have taken place. A fortuitous or judicious choice had been made in the balance of the hydrophilic-hydrophobic units of the molecule. Another teaching (U.K. Patent No. 1,140,910) obviated emulsions with an otherwise potent surfactant and also succeeded with a completely water-soluble glycol porogen by conducting the polymerization reaction either (1) in bulk without water present, or (2) in a highly salty aqueous suspension of 10-30 pph NaCl. Neither approach meets all the requirements of contemporary ion exchange resin manufacture. The salty suspension system produces intolerable wastes, and at best both systems yield poorly spherical beads unsuitable for product resins of acceptable strength and column packing.

## SUMMARY OF THE INVENTION

It has now been found that the liabilities of the previous art can be overcome by the discovery of a special group of macromolecular porogens. There exists a certain class of polymeric substances which combine, in a unique way, organic and water solubility, not dependent on chemical transformation, and function to give excellent macroporous resins. It seems to have been tacitly assumed in the art, heretofore, that it was contradictory for a material to be water extractable and act during polymerization as a porogen, necessarily within monomer droplets contacting an aqueous suspension medium. The apparent incompatibility of these conditions has been overcome. Requisite polymers and copolymers, having both hydrophilic and hydrophobic characters in the right balance, have been found.

It has been discovered that highly porous resins can be prepared by polymerizing an olefinic monomer, or mixture of monomers (each having at least one polymerizable functionality) in an aqueous suspension which contains the monomer(s), a free-radical initiator, and an inert macromolecular porogen which is soluble in the monomers under the conditions of polymerization and insoluble after polymerization, and which is at least partially soluble in water under certain purely physical conditions to facilitate removal after polymerization. The polymerization is preferably conducted at a temperature above any inverse cloud-point of the porogen, or below any normal cloud-point. After separation of the resulting polymer from the mixture, any remaining inert porogen is extracted with water as solvent.

It is therefore an object of this invention to provide strong, effective porous resins.

It is a further object of this invention to provide a selection of effective pore-forming agents which are removable most conveniently by aqueous extraction.

## DESCRIPTION OF THE INVENTION

Water insoluble poly(vinyl ethyl ether) had been previously reported as a porogen, but even then, only in a bulk polymerization free of water. It has been now discovered that the highly water-soluble poly(vinyl methyl ether) does work as an effective porogen without complication in aqueous suspension polymerizations of organic monomers. An explanation for this unexpected phenomenon is what is termed a negative solubility coefficient or "inverse cloud-point," often confusingly referred to as the "cloud-point." Soluble polymers often exhibit critical solution temperatures. The more familiar situation is that of a lower temperature solubility limit, where phase separation occurs upon cooling, as in a classical crystallization. Alterna- tively, an upper temperature solubility limit implies phase separation upon heating. By conducting the polymerization above the aqueous inverse cloud-point-- defined as the temperature above which a dilute water solution of the polymer, usually 1.0 or 0.1%, phase separates--then the porogen is unable to dissolve appreciably in the water, surrounding the bead or droplet. Once polymerization is complete and the temperature lowered, water solubility is regained.

Polyethylene glycol has been studied before but at temperatures far below its inverse cloud-point, and rather high salt (30 pph NaCl) solutions were used, resulting in irregular shapes for the product resins. Obviously, conducting an exothermic polymerization reaction at or above a 98.5°C inverse cloud-point is problematical without pressure equipment. Yet, copolymers of ethylene oxide exist, most notably those with propylene oxide, in which the inverse cloud-point is systematically lowered to acceptable temperatures. These polymers produce high porosity, at low levels, and are washed away with plain water at lower temperatures and occasionally with detergent solutions. Although both random and block copolymers work, less than 40% ethylene oxide contents seem to be dictated with the latter to prevent normal, inverse, and multiemulsions from forming.

A number of polymers are known to demonstrate inverse solubility temperature relationships in water. These may be applied under the present invention if they also meet the criterion of being soluble in the chosen monomer mixture at some appropriate temperature for polymerization. It is known that cellulose derivatives, in particular, show inverse cloud-points dependent on degree and type--for example, methyl-, ethylmethyl-, and carboxymethyl-cellulose. Even the aforementioned poly(oxyethylene) becomes acceptable if proper pressure equipment is available to contain the reaction.

The reverse situation is similarly applicable. If the polymeric porogen exhibits aqueous-phase separation below a certain temperature, then polymerization is allowed below that temperature, and afterwards, the porogen extracted by raising the temperature. More care needs to be exercised in this instance since local

- 9 -

0135292

temperatures inside the beads are higher than apparent during the exothermic polymerization.

The cloud-point rationale is not the entire story or a necessary condition of this finding. Surprisingly, it has been found that successful reactions can occur below the inverse cloud-point of a material (see Examples 2 and 11). An alternative explanation is simply that, although a porogen may be water soluble and entirely water miscible, it partitions effectively into the organic-monomer phase, nonetheless. Much empirical work and a mathematical model have been presented on partition coefficients for low molecular weight compounds. (C. Hansch, C. Javs, and others, and specifically, C. Hansch and A. Leo, SUBSTITUENT CONSTANTS FOR CORRELATION ANALYSIS IN CHEMISTRY AND BIOLOGY, Wiley Press, New York, 1979.) Interestingly, poly(vinyl methyl ether) is known to possess a high preference for organic media versus water below its already low inverse cloud-point: 98.2, 98.7, 99.2, 99.4, and 99.5% for cyclohexanone, methyl ethyl ketone, nitroethane, ethyl acetate, and toluene, respectively.

There is a further rationale that seems remotely possible, namely, transport of the macromolecular porogen out of the monomer mixture, where it is first dissolved by preference in the present invention, may be sufficiently slow on the time scale of the polymerization reaction, not to be problematical. It makes no difference operationally whether cloud-points, partition coefficients, transport rates or other, entirely different explanations prove true in order to apply the teaching of the present disclosure.

Those learned in polymer chemistry will be enabled to recognize analogous structures and permutations, equivalent in performance to the exact instances presented herein. Other soluble polymers and copolymers may be constructed as porogens with alternative hydrophilic and hydrophobic units, such as vinyl alcohol, glycidol, isobutyl vinyl ether, butylene or styrene oxides. Various polymerization catalysts, initiators, branching agents, functionalities, molecular weights, end groups, further co-monomers, and even alternative routes--e.g., glycol versus epoxide polymerization--can be applied to duplicate or refine the behavior discovered with presently available structures. Acceptable materials may have any number of ancillary characteristics as long as they possess the sufficient properties of being pore-forming, macromolecular, soluble in the monomers, and water extractable at some temperature, optionally with the aid of a detergent.

It is a feature of the present invention that these polymeric porogens can be readily recycled, at the least as easily as the sols and nonsols which are distilled. Being water-soluble macromolecules means present-day ultrafiltration and dialysis techniques are applicable, and possibly gel permeation chromatography. Once again, the cloud-point effect, whether inverse or direct, gives separation from water simply by temperature control.

There is a further procedure unique to this invention with or without any temperature effect. Organic monomers as such, including acrylic esters and styrene, are not commonly recognized as being organic solvents and often excellent ones at that; concepts such as solvency, applicable to low molecular weight compounds, become ambiguous with monomers "once polymerized." Solvent partition coefficients, favorable for organic over aqueous media, allow a porogen of the invention to function as such in the polymerizing monomers and then to be removed by water after polymerization since there are no monomer-solvents remaining. Re-extraction then by fresh solvent-monomers starts a cyclical process all over again.

It is a further and simultaneous virtue of this invention that there are no severe restraints on either crosslinking or porosity, that both may be selected at will and discretion. Not one but any number of different resins are produced, as determined by the performance needed in each application. Resins which have the performance--selectivities, capacities, and kinetics--of traditional gel beads, along with the physical strengths--osmotic shock resistance, long lifetimes--of macroporous beads can be prepared. Resins which have the pore volumes of traditional macroporous beads, along with the resiliency of gel beads, are available. Resins with the rigidity and permeability of standard macroporous beads are possible with additional resistance to shattering.

It is a particular advantage of the polymeric porogens, disclosed herein, that they are more effective: they yield greater porosities at similar levels or similar pore volumes at lower levels than sol and nonsol porogens easily, and even so-called synergist combinations with established pol porogens. For instance, Seidl, Malinsky, Dusek, and Heitz reported the incipience of porosity with 10% divinylbenzene for heptane and polystyrene porogens at approximately 77 and 17 pphw (parts porogen per hundred parts monomers by weight) or 102 and 15 pph by volume, respectively. With 20% divinylbenzene, the values are 38 pphw or 50 pphv for heptane. At lower divinylbenzene crosslinking, non-polymeric porogens become increasingly inefficient and severely costly. The efficiency of the polymeric porogens of the present invention is demonstrated rather remarkably, using the criterion of U.S. Patent No. 4,224,415. It is reported that precipitants (nonsol porogens) show "phase separation," as judged by the appearance of translucency in the copolymer beads, somewhere between 43-67 pphw tertiary amyl alcohol at 6% divinylbenzene, 54-67 pph secondary butyl alcohol at 9% divinylbenzene, and 30-54 pph normal butyl alcohol at 15% divinylbenzene. Further patents in the series (U.S. Patent Nos. 4,297,230 and 4,256,840) are unspecific about quantities of such porogens but state "phase separating" amounts. Easily, all the water-soluble porogens of the present invention show not translucency but opacity, more distinctly indicating phase separation or morphological heterogeneity, at 25 or 15 pph--and even at 5 pph with higher molecular weight materials.

The comparison with swellant porogens is even more dramatic. U.S. Patent No. 3,549,562 claims 43-233 pph of these agents at 50-12% divinylbenzene and preferably 32-20%. Below some 13% divinylbenzene, macroporosity does not occur with any amount of the good swellant toluene, and the polymerization reaction itself becomes difficult with the high dilutions required: 110 pphw toluene at 20% DVB.

The polymeric porogens disclosed in the present invention are advantageous and distinctive even in comparison with those exploited previously in the polymeric class, from polystyrene to cellulose esters. Besides the benefits of easy extraction, non-contamination, recycle, and safety, the present materials exhibit enhanced activity. Pore volumes over three times higher than the volume of the porogen itself have been observed. Phase separation begins very early in the polymerization, and the rate of polymerization is observed to be remarkably fast. It is believed that this is associated with such porogen materials carrying along water into the monomer mixture. These porogens may be, thereby, extended or self-synergized combinations of porogen plus water. With a solubility parameter of 23, even minor amounts of hydrogen-bonding water, solvating the polymer porogen chain, would radically affect the phase separating power of the porogen, as well as any incompatibility and interface with the polymerizing matrix. Hypothetically, it may be that as the generally hydrophobic monomers disappear by polymerization, still more water is drawn into the monomer droplet and solvates the porogen, leading to an auto-acceleration of phase separation and pore formation.

Historically, in order to get porosity, or help reduce excessive quantities of former porogens, high crosslinking had to be used.  The present invention does not suffer from the adverse economics of high crosslinking and, even at that, the still large quantities of those porogens required.  The situation is also self-defeating at higher crosslinking, in that up to 50% of the second double bond of divinylbenzene remains unreacted and wasted.  Worst of all, those former resins have had, very often, inappropriately structured gel regions.  As Meitzner and Oline have discussed (U.S. Patent No. 4,256,840), the effect of the degree of crosslinking shows up strikingly in the ion exchange resins derived from the simple copolymers.  While resistance to oxidative degradation has been sought through high ratios of crosslinking, the penalty of slow exchange rates and low gel-region moisture, also from the same high crosslink, has had to be endured.  In applications that rely solely on surface effects--e.g., catalysis in a poorly solvating media--a macroporous resin is usually superior to the alternative of very fine sizing of gel resins to increase surface areas.  However, many, and perhaps the majority, of ion exchange applications are sensitive to, or may rely entirely on, the internal gel structure of the resin and its solvation.  The polymeric matrix around the voids of a macroporous bead is, nonetheless, a gel resin of some type and character.  Macropores are, after all, physical diluents.

Recent advances in the art, focusing on porosity per se, have sought high void volumes (U.S. Patent No. 4,104,209).  While an achievement in its own right and useful in certain instances, this is very often undesirable.  When total resin capacity--maximum number of functional groups in a volume of resins--is the overriding issue, it is fundamental to keep macroporosities low. This is all the more important when a loose, highly-swollen, resin matrix is desired, too.  It is a strength of this invention that crosslinking is essentially unrestricted.  Porous articles have been produced with no crosslinking agent being present, or alternatively with essentially 100% crosslinking agent, and at very much the same low levels of porogen.

While desirable products result from the polymerization process of the present invention directly, more and useful resins are produced subsequently. According to long-established processes, ionic groups with exchangeable counter ions are introduced into polymers. Many methods have been devised for chemically transforming polystyrene, whether crosslinked or not; these are readily applicable to the present materials to yield useful articles under the scope of the invention. Anion exchange resins, specifically, are produced by sundry processes for chloromethylating polystyrene and subsequently aminating, as disclosed in exemplary patents (U.S. Patent Nos. 2,591,573; 2,591,574; 2,616,099; 2,616,877; 2,629,710; 2,631,999; 2,632,000; 2,642,417; 2,725,361; 2,794,785; 3,422,160; 3,311,602; 2,953,547; 4,225,677; and 3,425,990).

In contrast, once sulfonated, the beads of the present invention yield a very useful class of materials that fit into the category of strong-acid cation exchange resins. The discipline of ion exchange chemistry has come to be more broadly interpreted than encompassing just crosslinked, formally ionic, ionized, or ionizable resins. Non-functional, macroporous resins are useful in sorption processes and in molecular sieve type applications. Many functional groups, whether ionic or not, are available by long-established derivatization methods in the synthetic chemical art. To name a few, procedures are established in the literature for thiolation, phosphonation, chlorosulfonation, lithiation, acylation, halogenation, sulfitation, nitration and reduction.

Alternative to derivitization after polymerization, functional monomers can be similarly utilized in the present invention--e.g., acrylic derivatives for weak-acid cation exchangers, or vinylpyridine for weak-base resins.

Of course, mixed functionalities and certain combinations of the approaches are compatible.

In the process of the present invention, the embodiment preferred for ion exchange bead manufacture requires at least partial crosslinking as well as pearl polymerization. Application of the invention is not limited to infusible, insoluble, and bead-shaped polymers, though. Other shapes may be formed, and porous plastics with no chemical crosslinking have been synthesized.

Suitable polymerizable monoethylenically unsaturated compounds include styrene, vinyltoluene, alpha-methylstyrene, tertiarybutyl styrene, vinylpyridine, 2-methyl-5-vinylpyridine, ethyl acrylate, methacrylic acid or esters, N-tertiary butyl acrylamide, vinylidine chloride, tetrafluoroethylene, vinyl acetate, vinyl stearate, acrylonitrile, methacrolein, vinyl bromide. Suitable multi-ethylenically unsaturated monomers include divinylbenzene, diisopropylbenzene, ethyleneglycol dimethacrylate, hexanediol diacrylate, allyl methacrylate, divinyl ketone, divinylsulfone, trimethylolpropane trimethacrylate, and the like.

Free radical initiators are most desirable in the process of the invention although photoinitiation and ionizing radiation may be chosen. Suitable concentrations are 0.01 to 3.0%, more preferably 0.02 to 1.0%, and most preferably 0.05 to 0.5%. Choices include benzoyl peroxide, lauoryl peroxide, tertiary-butylperoxy neodecanoate, tertiary-amyl per-2-ethyl-hexanoate, tertiary-butyl perbenzoate, tertiary-butyl peroxide, azobisisobutyronitrile, 2,2-azobis-(2-methylbutyronitrile), 2-t-butylazo-2-cyanopropane, 1-t-butylazo-1-cyanocyclohexane, 2-t-butylazo-2-cyanobutane.

The manner of bead polymerization is quite standard and usual. Reaction temperatures are controlled from 40-100°C at atmospheric pressure for 3-17 hours or longer, as needed for complete conversion and to lower residual volatiles. With pressure equipment, temperatures above 100°C are available. A temperature appropriate for the porogen and where the chosen initiator has a 1-9 hour half-life, is useful. Routine suspension agents and stabilizers include polyvinylalcohol, methyl or carboxymethyl or hydroxyethyl cellulose, polyacrylate, and polymethacrylate salts, dimethyldialkylammonium polymers, calcium phosphate or carbonate or sulfate salts, bentonite clays, gum arabic, gelatine, and lignosulfonates.

## EXAMPLES

Following are specific examples provided to illustrate the principles and practice of the present invention. As selected, representative cases, they are not to be construed as limiting or restricting the scope of the invention. In light of the disclosure, variants, alternatives, modifications, and functionally equivalent means will be readily apparent to those skilled in the art without departing from the spirit of the invention. The properties of finished resins, prepared within the concept of the invention, will be adjusted as a matter of judgment to meet specific use requirements by selection of (1) the type and level of any crosslinking agent, (2) the amount along with molecular weight and composition of each polymeric insert, and (3) the degree and conditions of the chemical derivatization.

Numerous methods of pore measurement have been applied to macroporous resins. Absorption of non-solvating organics, such as methanol or heptane, was probably the earliest applied, and is still the simplest technique. Ironically, such organic liquids fit the nonsol category of porogens--soluble in monomers but "non-swellants" for the polymers--but in fact, they do physically swell or mechanically expand a number of styrene-divinylbenzene macroporous matrices. The effect may be surface wetting rather than true solvation of the matrix interior; regardless, the meaning of such porosity measurements is made ambiguous. While this and some of the other measurements are reported in this disclosure for comparison, characterization by the mercury intrusion technique including a standardized bead clean-up procedure (repeated sequential methanol and heptane washings, plus ambient temperature, vacuum drying) has been found more consistent and reliable.

Unless stated otherwise, percent (%) is defined as parts by weight of the total given organic mixture, while parts per hundred (pph) is simply a weight ratio--e.g., 50 pph porogen/monomers is equivalent to 33% porogen/total organics.

### EXAMPLE 1

A 50% aqueous solution of poly(vinyl methyl ether), reported to be approximately 30,000 in molecular weight, was freeze dried; 69.5 grams of the glassy solid was dissolved with stirring in 444.7g styrene, plus 40.7g of 56.9% pure commercial divinylbenzene, and 1.5g 2-t-butylazo-2-cyanobutane. Ten milliliters of this solution with 0.1g Calco Oil Red ZMQ formed a dark red mixture, which was stirred into 1 liter of hot deionized water containing 2.0g poly(vinyl alcohol) and 3.0g hydroxyethylcellulose, followed immediately by 200 ml of undyed monomer solution. The temperature was controlled at 84±1°C for 12 hours. The uniformly pink, opaque, spherical beads were collected on a screen and rinsed with water. No intense infrared absorption for the polyether at approximately 1090 cm$^{-1}$ was observable. A prepared sample showed by mercury intrusion: 0.44 ml/g, 32 m$^2$/g, and 2,052 Å mean pore radius.

### EXAMPLE 2

A mixture was prepared of 457.4g styrene, 42.6g of 54.2% pure divinylbenzene, 3.0g azobisisobutyronitrile, and 35g of a reported, random, 12,000 molecular weight, copolymer of ethylene and 20 mole % propylene oxides to lower the inverse cloud-point to 80°C. This was stirred at 72°C overnight in an aqueous suspension containing 2g polyvinyl alcohol, 4.1g calcium chloride dihydrate, 3g hydroxyethylcellulose, and 9.3g magnesium sulfate heptahydrate. The spherical, opaque beads were rinsed briefly with tap water; the distinctive 1105 cm$^{-1}$, infrared absorption for the polyether was undetectable in the resin. Mercury intrusion pore measurement gave 0.27 ml/g and 42 m$^2$/g.

## EXAMPLE 3

A mixture of 74.1g 4-vinylpyridine, 25.9g of 54% pure divinylbenzene, 1g 2,2-azobis-(2-methylbutyronitrile) and 15g of a copolymer of ethylene and 43 mole % propylene oxides with a molecular weight of 4,000 was polymerized at 75°C overnight. Conditioned beads showed 0.38 ml/g.

## EXAMPLE 4

A mixture of 50g ethyleneglycol dimethacrylate, 450g methyl methacrylate, 1g 2,2-azobis-(2-methylbutyronitrile) and 75g of the polyether of Example 3 was polymerized at 77-84°C overnight. The opaque beads were rinsed with methanol then heptane repeatedly, and vacuum dried for mercury intrusion porosimetry: 34 m$^2$/g.

## EXAMPLE 5

A sample of 95% divinylbenzene, containing both meta- and para- isomers, was suspension polymerized with the same porogen and concentration of Example 3 and 0.2 pph 2-t-butylazo-2-cyanopropane at 88°C. A pore volume of 0.63 ml/g and a pore area of 57 m$^2$/g were determined by the intrusion method.

## EXAMPLE 6

Suspension polymerization of 8.9g of 56.3% pure divinylbenzene with 491.1g styrene and 0.3 pph 2-t-butylazo-2-cyanobutane and 15 pph of a 1:1 by mass, copolymer of propylene and ethylene oxides yielded a porosity of 0.69 ml/g with mean pore radius of 1423 Å.

## EXAMPLE 7

A monomer mixture containing 5.0 pph divinylbenzene, styrene, 18.6 pph of a 70% poly(vinyl methyl ether) in toluene solution, and 0.2 pph 2-t-butylazo-2-cyanobutane was polymerized in suspension at 88°C. The conditioned beads had a heptane absorption of 0.43 ml/g and a toluene absorption of 1.22 g/g.

## EXAMPLE 8

A branched, block, 6000 mw poly(20% oxyethylene-co-80% oxypropylene) was the modifier at 13 pph in a 6.5 pph divinylbenzene, styrene, 0.08 pph 2-t-butylazo-2-cyano-butane mixture polymerization at 88°C in suspension. After extraction with Dowfax 2AO and preparation for pore characterization, the beads showed 0.30 ml/g and a mean pore radius of 427Å.

## EXAMPLE 9

Styrene, 15 pph methyl methacrylate, 15 pph of the porogen of Example 3, and 0.2 pph 2-t-butylazo-2-cyano propane were mixed and polymerized in suspension at 88°C: 0.22 ml/g, 60 $m^2$/g.

## EXAMPLE 10

A polymerization was carried out as in Example 9 with 19 pph of the porogen and the exclusion of methyl methacrylate: 0.13 ml/g, 254 Å mean pore radius.

## EXAMPLE 11

Polymerization was carried out as in Example 2 with the following changes: 10 pph of a like porogen except with molecular weight 26,000 (same exclusion volume as 41,000 mw polystyrene standard by gel permeation chromatography), 0.18 pph tertiarybutyl perpivalate initiator, 65°C temperature, and 4.5 pph divinylbenzene. The product showed a heptane absorption of 0.21 ml/g, and 0.16 ml/g pore volume by intrusion.

CLAIMS:

1. A method of preparation of a highly porous resin, which comprises polymerizing one or more monomers, each having at least one polymerizable functionality, and recovering the resulting polymer, characterized in that the polymerization is carried out in the presence of a polymerization initiator for the polymerizable functionality and an inert macromolecular porogen which is soluble in the one or more monomers, under the conditions of polymerisation, and which is sufficiently soluble in water to facilitate removal after polymerization and in that the porogen is them removed from the polymer.

2. A method according to claim 1, wherein the polymer is functionalized.

3. A method according to claim 1 or 2, wherein the polymerization is carried out at a temperature above any inverse cloud-point of the porogen.

4. A method according to claim 1 or 2, wherein the polymerization is carried out at a temperature below any normal cloud-point of the porogen.

5. A method according to any preceding claim, wherein the porogen is removed from the polymer at a temperature below any inverse cloud-point of the porogen after polymerization.

6. A method according to any of claims 1 to 4, wherein the porogen is removed from the polymer at a temperature above any normal cloud-point of the porogen after polymerization.

7. A method according to any preceding claim, wherein a detergent solution is used to remove the porogen.

8. A method according to any preceding claim, wherein one monomer is styrene.

9. A method according to any preceding claim, wherein one monomer is divinylbenzene.

10. A method according to any preceding claim, wherein the monomer is selected from acrylic and methacrylic esters and amides and mixtures thereof.

11. A method according to any preceding claim, wherein the macromolecular porogen is a poly(vinyl methyl ether).

12. A method according to any of claims 1 to 10, wherein the macromolecular porogen is a poly(ethylene oxide) or a copolymer thereof.

13. A method according to any preceding claim, wherein the polymerization is carried out at a temperature in the range from $50^{\circ}$ to $100^{\circ}$C at atmospheric pressure.

14. A method according to any of claims 1 to 12, wherein the polymerization is carried out under pressure at a temperature in the range from $100^{\circ}$ to $168^{\circ}$C.

15. A method according to any preceding claim, wherein the polymerization is carried out in aqueous suspension.

European Patent Office

## DOCUMENTS CONSIDERED TO BE RELEVANT

| Category | Citation of document with indication where appropriate, of relevant passages | Relevant to claim | CLASSIFICATION OF THE APPLICATION (Int Cl 4) |
|---|---|---|---|
| D,X Y | GB-A-1 140 910   (PERMUTIT CO.)<br><br>* claims 1-5,7; page 1, lines 33-60; page 1, line 70 - page 2, line 17; page 2, lines 44-59; examples * | 1,2,8-13,15 | C 08 J   9/26<br>C 08 F 283/06<br>C 08 F 261/06<br>C 08 F   2/20 |
| | --- | | |
| Y | US-A-3 796 774   (N.D. FIELD et al.)<br>* examples I,V,VII,VIII * | 1,2,8-13,15 | |
| | --- | | |
| A | FR-A-2 162 084   (DeBELL & RICHARDSON)<br>* claims 1,4,8; page 3, lines 33-35; examples * | 1,11,12 | |
| | ----- | | |

TECHNICAL FIELDS
SEARCHED (Int. Cl.4)

C 08 J
C 08 F

The present search report has been drawn up for all claims

| Place of search<br>THE HAGUE | Date of completion of the search<br>26-10-1984 | Examiner<br>HALLEMEESCH A.D. |
|---|---|---|